# EUROPEAN PATENT SPECIFICATION

(11) **EP 3 045 775 B1**
(45) Date of publication and mention of the grant of the patent: **10.05.2017**
(21) Application number: 16150840.3
(22) Date of filing: 12.01.2016
(51) Int. Cl.: F16H 47/02, F16H 3/00, F16H 3/093

(54) **HYDROSTATIC PROPULSION SYSTEM FOR VEHICLES**
HYDROSTATISCHES ANTRIEBSSYSTEM FÜR FAHRZEUGE
SYSTÈME DE PROPULSION HYDROSTATIQUE POUR VÉHICULES

(30) Priority: 13.01.2015 IT TO20150026
(43) Date of publication of application: 20.07.2016
(73) Proprietor: Oerlikon Graziano S.p.A., 10098 Rivoli (TO) (IT)
(72) Inventor: SORBINI, Riccardo, I-10090 CASCINE VICA - RIVOLI (Torino) (IT)
(74) Representative: Rondano, Davide

(56) References cited:
- WO-A1-2012/168116
- WO-A1-2014/167130
- US-A- 6 044 728
- US-A1- 2009 139 224

## Description

The present invention relates to a hydrostatic propulsion system for vehicles.

It is known the use hydrostatic propulsion systems on vehicles, in particular on agricultural tractors and earth moving machines. A typical hydrostatic propulsion system for vehicle comprises an internal combustion engine and a hydrostatic transmission, wherein the hydrostatic transmission comprises in turn a variable-displacement hydraulic pump arranged to be driven by the internal combustion engine, a variable-displacement hydraulic motor arranged to be driven by the hydraulic pump and a gearbox having a primary shaft arranged to be driven into rotation by the hydraulic motor and at least one secondary shaft arranged to drive the driving wheels of the vehicle into rotation. More specifically, hydrostatic propulsion systems with two forward gears are known, wherein the two forward gears are obtained either by using two hydraulic motors or by using one single hydraulic motor coupled to a gearbox with two forward gears.

US2009/139224 A discloses a hydrostatic propulsion system for vehicles comprising a prime mover and a hydrostatic transmission,
wherein the hydrostatic transmission comprises a variable-displacement hydraulic pump, a first variable displacement hydraulic motor, a gearbox with a number of forward gears,
wherein the gearbox comprises three primary shafts, namely a first primary shaft which is connected for rotation with the first hydraulic motor and carries driving gearwheels associated to the respective gears, a second primary shaft which is permanently connected for rotation with the second hydraulic motor and carries driving gear wheels associated to the respective gears, and a third primary shaft which is connected for rotation with the prime mover,
wherein the gearbox further comprises one secondary shaft carrying a plurality of driven gearwheels permanently meshing each with a respective driving gearwheel,
wherein the gearbox further comprises gear engaging means arranged to connect each driving gearwheel for rotation with the respective primary shaft,
wherein the control unit is arranged to control the first and second hydraulic motors and to control the gear engaging means of the gearbox so as to carry out predetermined operating modes

It is an object of the present invention to provide a hydrostatic propulsion system for vehicles which offers three or more forward gears.

Another object of the present invention is to provide a hydrostatic propulsion system for vehicles which allows to shift from one gear to another with at least one gear being always engaged, thereby avoiding interruptions in the transmission of the torque during a gear shift manoeuvre.

A further object of the present invention is to provide a hydrostatic propulsion system for vehicles having no friction clutches.

It is still another object of the present invention to provide a hydrostatic propulsion system for vehicles having a compact structure.

These and other objects are fully achieved according to the present invention by virtue of a hydrostatic propulsion system having the characteristics set forth in the enclosed independent claims 1 and 2.

Preferred embodiments of the invention are defined in the dependent claims, the subject-matter of which is to be regarded as forming an integral and integrating part of the present description.

In short, the invention is based on the idea of providing a hydrostatic propulsion system for vehicles in which the hydrostatic transmission comprises a variable-displacement hydraulic pump, first and second variable-displacement hydraulic motors, a gearbox with at least three forward gears and a control unit arranged to control the two hydraulic motors and to control the engagement of the gears of the gearbox according to predetermined operating modes,
wherein the gearbox comprises three primary shafts, namely a first primary shaft which is permanently drivingly connected for rotation with the first hydraulic motor and carries one or more driving gearwheels associated to the odd forward gears (except for the driving gearwheel associated to the highest gear, if the latter is an odd gear), a second primary shaft which is permanently drivingly connected for rotation with the second hydraulic motor and carries one or more driving gearwheels associated to the even forward gears (except for the driving gearwheel associated to the highest gear, if the latter is an even gear) and a third primary shaft which is connected for rotation with the internal combustion engine and carries the driving gearwheel associated to the highest forward gear,
wherein the gearbox further comprises at least one secondary shaft carrying a plurality of driven gearwheels permanently meshing each with a respective driving gearwheel,
wherein the gearbox further comprises gear engagement means arranged to connect each driving gearwheel for rotation with the respective primary shaft or each driven gearwheel for rotation with the respective secondary shaft, and
wherein the control unit is arranged to control the first and second hydraulic motors and to control the gear engagement means of the gearbox so as to implement predetermined operating modes, including the transmission of the motion by means of the first hydraulic motor with the first gear engaged, the transmission of the motion by means of the second hydraulic motor with the second gear engaged, the gear shift from the first to the second gear with the first and second hydraulic motors simultaneously connected each with the respective primary shaft, and the transmission of the motion by means of the internal combustion engine with the highest gear engaged.

The hydrostatic propulsion system according to the invention is thus able to offer at least three forward gears. With the highest gear engaged, the driving torque is transmitted to the vehicle wheels by the internal combustion engine, whereas with the lower gears engaged (first and second gear, in case for example of a three-gear gearbox, or first, second and third gear, in case for example of a four-gear gearbox) the driving torque is transmitted to the vehicle wheels by at least one of the two hydraulic motors. Moreover, since each pair of adjacent gears (first and second gear, second and third gear, third and fourth gear, in case for example of a four-gear gearbox) is associated to different motors (the first and second gear are associated to the first hydraulic motor and to the second hydraulic motor, respectively, the second and third gear are associated to the second hydraulic motor and to the first hydraulic motor, respectively, and the third and fourth gear are associated to the first hydraulic motor and to the internal combustion engine, respectively), the gear shift from each gear to the adjacent one, be it a higher or lower gear, can be carried out without interruptions in the transmission of the torque, as both the motors associated to the two gears (the gear to be engaged and the gear to be disengaged) are able to transmit torque to the secondary shaft via the respective gear during the gear shift manoeuvre. Furthermore, since the two hydraulic motors are permanently connected for rotation with the first and second primary shaft of the gearbox, respectively, the hydrostatic propulsion system according to the invention has the advantage that it does not require the use of friction clutches and is therefore less complicated and expensive than the prior art.

The hydrostatic transmission of the hydrostatic propulsion system according to the invention may have a three-axis configuration, with the first and second primary shaft arranged coaxially to each other and with the first and second hydraulic motor arranged coaxially to each other on the axially opposite sides of the gearbox. Alternatively, the hydrostatic transmission of the hydrostatic propulsion system according to the invention may have a four-axis configuration, with the first and second primary shaft arranged parallel, but not coaxially, to each other and with the first and second hydraulic motor also arranged parallel, but not coaxially to each other, preferably on the same side of the gearbox.

Further characteristics and advantages of the present invention will result from the following detailed description, given purely by way of non-limiting example with reference to the appended drawings, where:
Figure 1 shows an example of application of a hydrostatic propulsion system according to the present invention to an earth moving machine;
Figure 2 shows the general layout of a hydrostatic propulsion system for vehicles according to an embodiment of the present invention,
Figure 3 is a perspective view of the hydrostatic transmission of the hydrostatic propulsion system of Figure 2, and
Figure 4 shows the general layout of a hydrostatic propulsion system for vehicles according to another embodiment of the present invention.

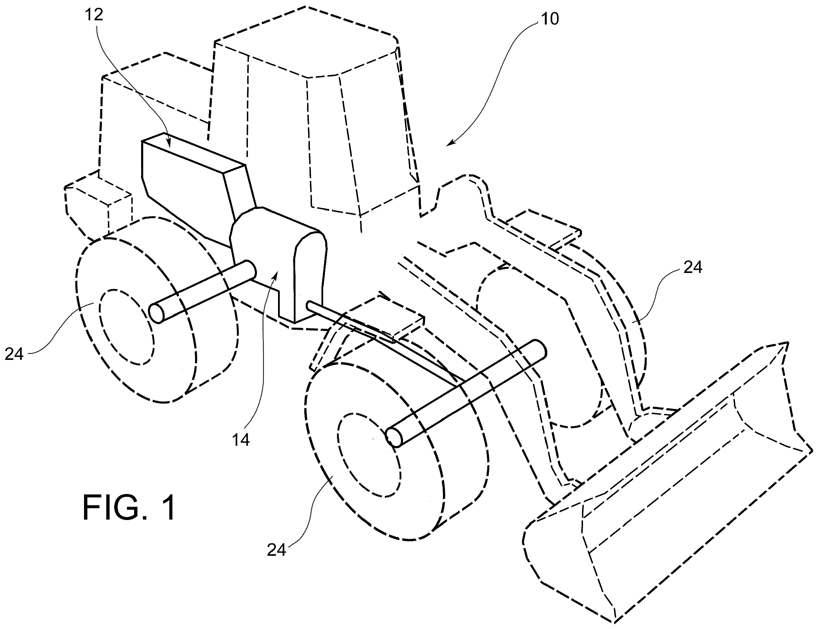

Figure 1 shows a hydrostatic propulsion system according to an embodiment of the present invention, the system being mounted on an earth moving machine generally indicated 10. Such an application is to be regarded as merely representing an example, without therefore limiting the scope of protection of the present invention, as the invention is also applicable to many other kinds of vehicles, such as for example agricultural tractors.

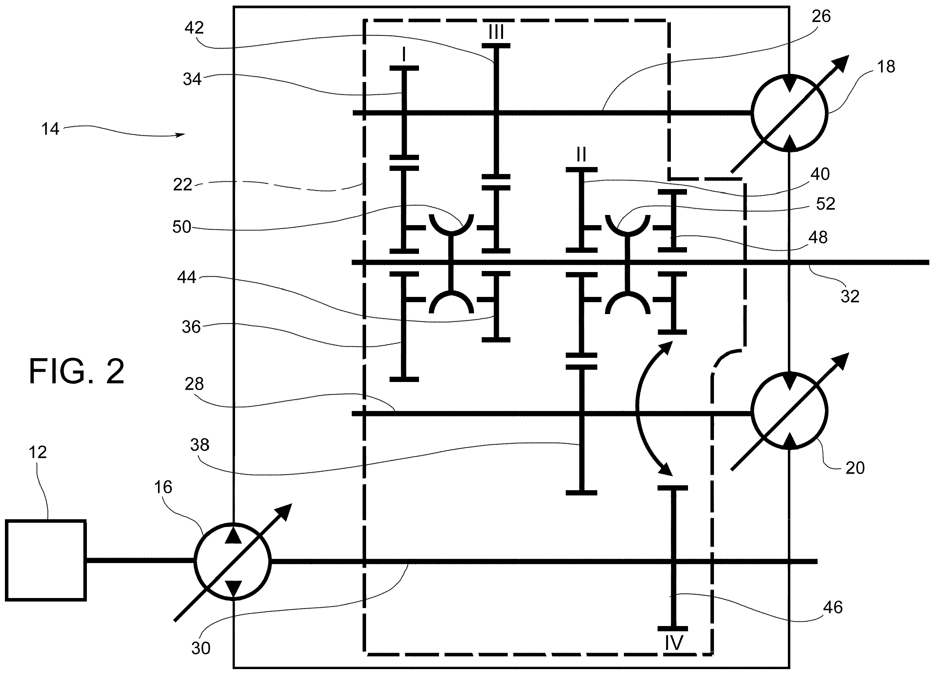

With reference also to Figures 2 to 4, the hydrostatic propulsion system comprises a prime mover 12, in particular an internal combustion engine, and a hydrostatic transmission generally indicated 14. The hydrostatic transmission 14 comprises in turn a variable-displacement hydraulic pump 16 which is mechanically connected to the prime mover 12 to be driven by the latter, a first variable-displacement hydraulic motor 18 and a second variable-displacement hydraulic motor 20, each of the motors 18 and 20 being hydraulically connected to the hydraulic pump 16 to be driven by the latter, a gearbox 22 with at least three forward gears (in the proposed embodiment, a gearbox with four forward gears) interposed between the motors (prime mover 12, first hydraulic motor 18 and second hydraulic motor 20) and the vehicle wheels (indicated 24) to change the transmission ratio with which the motors 12, 18 and 20 transmit the motion to the vehicle wheels 24, and an electronic control unit (not shown, but of per-se-known type) arranged to control the two hydraulic motors 18 and 20 and to control the engagement of the gears of the gearbox 22 according to predetermined operating modes, which will be explained in detail further on.
The gearbox 22 comprises three primary shafts 26, 28 and 30, namely a first primary shaft 26 permanently drivingly connected for rotation with the first hydraulic motor 18, a second primary shaft 28 permanently drivingly connected for rotation with the second hydraulic motor 20 and a third primary shaft 30 connected for rotation with the prime mover 12, and a secondary shaft 32. The third primary shaft may be drivingly connected for rotation with the prime mover 12 either permanently or not, for example with one or more intermediate transmission stages interposed therebetween. Although the proposed embodiment comprises one secondary shaft only, there might be even more than one secondary shaft, in particular two secondary shafts, the one associated to the even gears and the other associated to the odd gears.

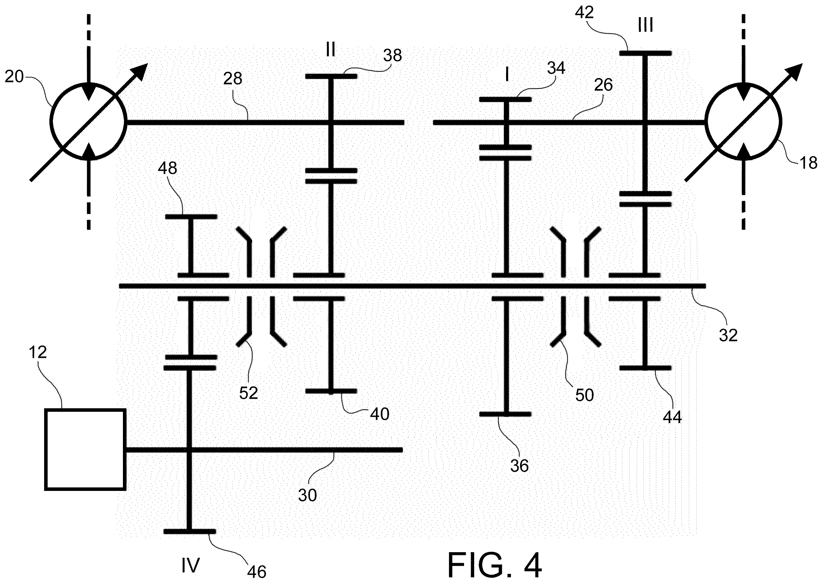

The shafts 26, 28, 30 and 32 of the gearbox 22 may be arranged according to a four-axis configuration, as is shown in Figure 2, that is to say, with the shafts arranged parallel, but not coaxially, to each other, or according to a three-axis configuration, as is shown in Figure 4, that is to say, with the first primary shaft 26 and the second primary shaft 28 arranged coaxially to each other. The gearbox 22 further comprises, as explained in greater detail below, a plurality of gearwheels which are mounted on the primary shafts 26, 28 and 30 and on the secondary shaft 32 and form the gear sets associated to the various gears of the gearbox. In general terms, the gearwheels are arranged in such a manner that the gear set implementing the highest gear (in the proposed embodiment, the fourth gear) is driven by the prime mover 12 via the third primary shaft 30, while the gear sets implementing the remaining gears (in the proposed embodiment, the first, second and third gear) are driven by the two hydraulic motors 18 and 20 via the first primary shaft 26 and the second primary shaft 28. More specifically, the gear sets implementing the odd gears (in the proposed embodiment, the first and third gear) are driven by the first hydraulic motor 18 via the first primary shaft 26, while the gear set implementing the remaining even gear (second gear) is driven by the second hydraulic motor 20 via the second primary shaft 28. Each gear set comprises a driving gearwheel mounted on a respective primary shaft of the gearbox and a driven gearwheel mounted on the secondary shaft of the gearbox, the driven gearwheel permanently meshing with the respective driving gearwheel. In the proposed embodiments, the driving gearwheels are fixed gearwheels, i.e. they are each mounted on the respective primary shaft so as to be drivingly connected for rotation therewith, while the driven gearwheels are idle gearwheels and are connectable for rotation with the secondary shaft by means of coupling devices of per-se-known type. More specifically, the gear set of first gear (indicated I) comprises a first driving gearwheel 34 carried by the first primary shaft 26 and a first driven gearwheel 36 carried by the secondary shaft 32, the gear set of second gear (indicated II) comprises a second driving gearwheel 38 carried by the second primary shaft 28 and a second driven gearwheel 40 carried by the secondary shaft 32, the gear set of third gear (indicated III) comprises a third driving gearwheel 42 carried by the first primary shaft 26 and a third driven gearwheel 44 carried by the secondary shaft 32, and the gear set of fourth gear (indicated IV) comprises a fourth driving gearwheel 46 carried by the third primary shaft 30 and a fourth driven gearwheel 48 carried by the secondary shaft 32.

A first coupling device 50 associated to the first driven gearwheel 36 and to the third driven gearwheel 44 is mounted on the secondary shaft 32 and is selectively movable into a first engagement position, where it couples the first driven gearwheel 36 for rotation with the secondary shaft 32, into a second engagement position, where it couples the third driven gearwheel 44 for rotation with the secondary shaft 32, or into a neutral position, where the first driven gearwheel 36 and the third driven gearwheel 44 are both free to rotate relative to the secondary shaft 32. A second coupling device 52 associated to the second driven gearwheel 40 and to the fourth driven gearwheel 48 is mounted on the secondary shaft 32 and is selectively movable into a first engagement position, where it couples the second driven gearwheel 40 for rotation with the secondary shaft 32, into a second engagement position, where it couples the fourth driven gearwheel 48 for rotation with the secondary shaft 32, or into a neutral position, wherein the second driven gearwheel 40 and the fourth driven gearwheel 48 are both free to rotate relative to the secondary shaft 32. The secondary shaft 32 transmits the motion to the vehicle wheels 24 (in the embodiment shown in Figure 1, to all the four vehicle wheels) through transmission members of per-se-known type (differential gears, lay shafts and semi-axles).

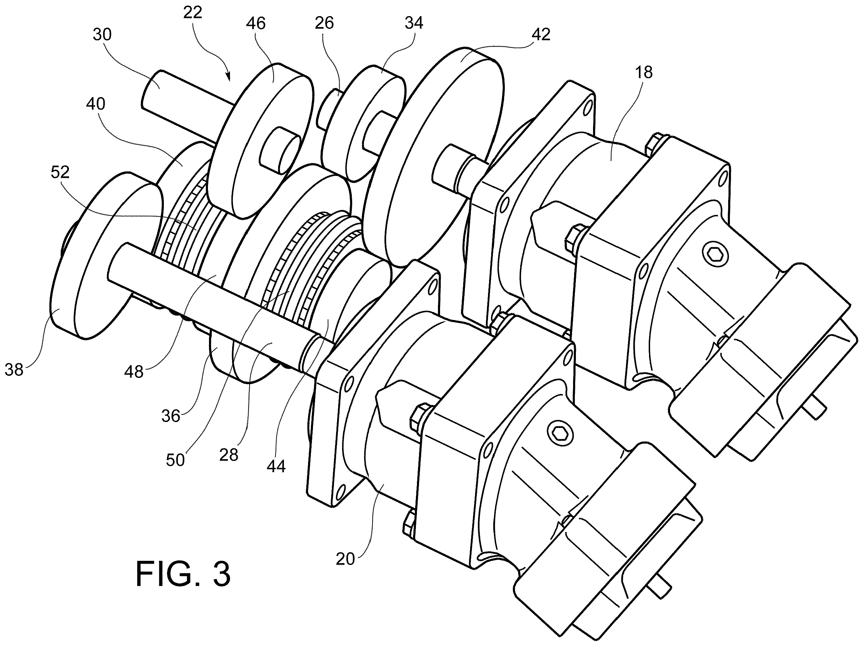

In the embodiment of Figures 2 and 3, wherein the gearbox 22 has a four-axis configuration, the two hydraulic motors 18 and 20 are preferably arranged on the same side of the gearbox, in order to reduce the overall axial size of the hydrostatic transmission 14. In the embodiment of Figure 4, in which the gearbox 22 has a three-axis configuration, the two hydraulic motors 18 and 20 are arranged on axially opposite sides of the gearbox.

According to a variant embodiment, not shown, the gearbox has three forward gears, wherein the gear set of first gear (formed by the driving gearwheel 34 and by the driven gearwheel 36) is driven by the first hydraulic motor 18 via the first primary shaft 26, the gear set of second gear (formed by the driving gearwheel 38 and by the driven gearwheel 40) is driven by the second hydraulic motor 20 via the second primary shaft 28 and the gear set of third gear (formed by the driving gearwheel 42 and by the driven gearwheel 44) is driven by the prime mover 12 via the third primary shaft 30. Apart from that, what has been explained above with reference to the embodiments of Figures 2 to 4 also applies to this variant embodiment.

The hydrostatic transmission 14 of Figures 2 to 4 operates as follows.

First of all, the hydrostatic transmission 14 may work with one gear engaged at a time. According to this operating mode, which is suitable in particular for low-load conditions, the transmission works therefore with the first gear engaged only, in which case the driving torque is provided only by the first hydraulic motor 18, with the second gear engaged only, in which case the driving torque is provided only by the second hydraulic motor 20, with the third gear engaged only, in which case the driving torque is provided only by first hydraulic motor 18, or with the fourth gear engaged only, in which case the driving torque vis provided only by the prime mover 12. In any case, the hydrostatic transmission allows to shift from one gear to another without interruptions in the transmission of the driving torque. Before completely disengaging the gear to be disengaged, engagement of the gear to be engaged in in fact started and, while the torque transmitted by the motor associated to the gear to be disengaged is reduced, the torque transmitted by the motor associated to the gear to be engaged is increased. In this way, it is not only possible to avoid interruptions in the transmission of the torque during a gear shift phase, but also to reduce the so-called "torque hole".

The hydrostatic transmission 14 allows a second operating mode, according to which the first and second gear or the second and third gear are engaged at the same time, and the driving torque is therefore provided by the two hydraulic motors 18 and 20 at the same time. According to this operating mode, therefore, the driving torque transmitted to the secondary shaft 32 is the sum of the torques provided by both the hydraulic motors.

In case of simultaneous engagement of the first and second gear, the coupling device 50 associated to the odd gears will be positioned so as to connect the driven gearwheel 36 of the gear set of first gear for rotation with the secondary shaft 32, while the coupling device 52 associated to the even gears will be positioned so as to connect the driven gearwheel 40 of the gear set of second gear for rotation with the secondary shaft 32. Moreover, the two hydraulic motors 18 and 20 will be suitably controlled by the electronic control unit so that the angular speeds of the driven gearwheels 36 and 40, which are both drivingly connected for rotation with the secondary shaft 32, are equal to each other. Since the angular speed of the driven gearwheel 36 of the gear set of first gear is equal to the angular speed of the first primary shaft 26, and hence of the drive shaft of the first hydraulic motor 18, multiplied by the transmission ratio of first gear and since the angular speed of the driven gearwheel 40 of the gear set of second gear is equal to the angular speed of the second primary shaft 28, and hence of the drive shaft of the second hydraulic motor 20, multiplied by the transmission ratio of second gear, it follows that the two hydraulic motors 18 and 20 will have to be driven into rotation with angular speeds such that the ratio of the angular speed of the first hydraulic motor 18 to the angular speed of the second hydraulic motor 20 is equal to the ratio of the transmission ratio of second gear to the transmission ratio of first gear. In such an operating condition, therefore, the speeds of the two hydraulic motors 18 and 20 will be changed by the electronic control unit depending on the driver's commands, but will however keep the above-defined ratio.

In case of simultaneous engagement of the second and third gear, the coupling device 50 associated to the odd gears will be positioned so as to connect the driven gearwheel 44 of the gear set of third gear for rotation with the secondary shaft 32, while the coupling device 52 associated to the even gears will be positioned so as to connect the driven gearwheel 40 of the gear set of second gear for rotation with the secondary shaft 32. Also in this case the two hydraulic motors 18 and 20 will be suitably controlled by the electronic control unit so that the angular speeds of the driven gearwheel 40 of second gear and of the driven gearwheel 44 of third gear, which are both drivingly connected for rotation with the secondary shaft 32, are equal to each other. On the basis of the same explanations provided above with reference to the case where the first and second gear are engaged at the same time, the two hydraulic motors 18 and 20 will have to be controlled by the control unit so that the ratio of the angular speed of the first hydraulic motor 18 to the angular speed of the second hydraulic motor 20 is always equal to the ratio of the transmission ratio of second gear to the transmission ratio of third gear.

When shifting from the condition of simultaneous engagement of the first and second gear to the condition of simultaneous engagement of the second and third gear, and vice versa, the second gear remains engaged. Therefore, when shifting from one condition to the other the angular speed of the secondary shaft 32, and hence the vehicle speed, is determined by the angular speed of the second hydraulic motor 20, while the angular speed of the first hydraulic motor 18 has to be suitably changed to adapt to the transmission ratio of the new gear (first or third gear). Moreover, when shifting from one condition to the other the electronic control unit will have to reduce the torque delivered by the first hydraulic motor 18, so as to allow the disengagement of the old gear and the engagement of the new gear, while it will have to increase the torque delivered by the second hydraulic motor 20 to compensate for the torque loss of the first hydraulic motor 18 and ensure in this way that the torque available at the wheels remains unchanged, or at least that the reduction in the torque available at the wheels is very small.

Finally, the hydrostatic transmission 14 allows to transmit to the vehicle wheels the torque delivered by the prime mover 12 only, with the highest gear engaged (fourth gear, in the proposed embodiment).

Naturally, the principle of the invention remaining unchanged, the embodiments and the constructional details may vary widely from those described and illustrated purely by way of non-limiting example, without thereby departing from the scope of the invention as defined in the appended claims.

## Claims

1. Hydrostatic propulsion system for vehicles, comprising a prime mover (12) and a hydrostatic transmission (14),
wherein the hydrostatic transmission (14) comprises a variable-displacement hydraulic pump (16), a first variable-displacement hydraulic motor (18), a second variable-displacement hydraulic motor (20), a gearbox (22) with an even number of forward gears (I, II, III, IV) equal at least to four and a control unit arranged to control the first and second hydraulic motor (18, 20) and to control the engagement of the gears of the gearbox (22),
wherein the gearbox (22) comprises three primary shafts (26, 28, 30), namely a first primary shaft (26) which is permanently drivingly connected for rotation with the first hydraulic motor (18) and carries one or more driving gearwheels (34, 42) associated to the odd gears (I, III), a second primary shaft (28) which is permanently drivingly connected for rotation with the second hydraulic motor (20) and carries one or more driving gearwheels (38) associated to the even gears (II), except for the driving gearwheel (46) associated to the highest gear (IV) of said forward gears (I, II, III, IV), and a third primary shaft (30) which is connected for rotation with the prime mover (12) and carries the driving gearwheel (46) associated to said highest gear (IV),
wherein the gearbox (22) further comprises at least one secondary shaft (32) carrying a plurality of driven gearwheels (36, 40, 44, 48) permanently meshing each with a respective driving gearwheel (34, 38, 42, 46),
wherein the gearbox (22) further comprises gear engagement means (50, 52) for connecting each driving gearwheel (34, 38, 42, 46) for rotation with the respective primary shaft (26, 28, 30) or each driven gearwheel (36, 40, 44, 48) for rotation with the respective secondary shaft (32), and
wherein the control unit is arranged to control the first and second hydraulic motor (18, 20) and to control the gear engagement means (50, 52) of the gearbox (22) so as to implement predetermined operating modes, said predetermined operating modes including the transmission of the motion by means of the first hydraulic motor (18) with the first gear (I) engaged, the transmission of the motion by means of the second hydraulic motor (20) with the second gear (II) engaged, the gear shift from the first gear (I) to the second gear (II) with the first hydraulic motor (18) connected with the first primary shaft (26) and at the same time with the second hydraulic motor (20) connected with the second primary shaft (28), and the transmission of the motion by means of the prime mover (12) with the highest gear (IV) engaged.

2. Hydrostatic propulsion system for vehicles comprising a prime mover (12) and a hydrostatic transmission (14),
wherein the hydrostatic transmission (14) comprises a variable-displacement hydraulic pump (16), a first variable-displacement hydraulic motor (18), a second variable-displacement hydraulic motor (20), a gearbox (22) with an odd number of forward gears (I, II, III) equal at least to three and a control unit arranged to control the first and second hydraulic motor (18, 20) and to control the engagement of the gears of the gearbox (22),
wherein the gearbox (22) comprises three primary shafts (26, 28, 30), namely a first primary shaft (26) which is permanently drivingly connected for rotation with the first hydraulic motor (18) and carries one or more driving gearwheels (34) associated to the odd gears (I), except for the driving gearwheel (42) associated to the highest gear (III) of said forward gears (I, II, III), a second primary shaft (28) which is permanently drivingly connected for rotation with the second hydraulic motor (20) and carries one or more driving gearwheels (38) associated to the even gears (II), and a third primary shaft (30) which is connected for rotation with the prime mover (12) and carries the driving gearwheel (42) associated to said highest gear (III),
wherein the gearbox (22) further comprises at least one secondary shaft (32) carrying a plurality of driven gearwheels (36, 40, 44) permanently meshing each with a respective driving gearwheel (34, 38, 42),
wherein the gearbox (22) further comprises gear engagement means (50, 52) for connecting each driving gearwheel (34, 38, 42) for rotation with the respective primary shaft (26, 28, 30) or each driven gearwheel (36, 40, 44) for rotation with the respective secondary shaft (32), and
wherein the control unit is arranged to control the first and second hydraulic motor (18, 20) and to control the gear engagement means (50, 52) of the gearbox (22) so as to implement predetermined operating modes, said predetermined operating modes including the transmission of the motion by means of the first hydraulic motor (18) with the first gear (I) engaged, the transmission of the motion by means of the second hydraulic motor (20) with the second gear (II) engaged, the gear shift from the first gear (I) to the second gear (II) with the first hydraulic motor (18) connected with the first primary shaft (26) and at the same time with the second hydraulic motor (20) connected with the second primary shaft (28), and the transmission of the motion by means of the prime mover (12) with the highest gear (III) engaged.

3. Propulsion system according to claim 1 or claim 2, wherein the prime mover (12) is an internal combustion engine.

4. Propulsion system according to any of the preceding claims, wherein the driving gearwheels (34, 38, 42, 46; 34, 38, 42) are mounted each on the respective primary shaft (26, 28, 30) so as to be drivingly connected for rotation therewith, while the driven gearwheels (36, 40, 44, 48; (36, 40, 44) are idly mounted on said at least one secondary shaft (32).

5. Propulsion system according to any of the preceding claims, wherein the gearbox (22) comprises one secondary shaft (32) only.

6. Propulsion system according to any of claims 1 to 4, wherein the gearbox (22) comprises two secondary shafts, the one carrying the driven gearwheels (36, 44) associated to the odd gears (I, III) and the other carrying the driven gearwheels (40, 48) associated to the even gears (II, IV).

7. Propulsion system according to any of the preceding claims, wherein the first primary shaft (26) and the second primary shaft (28) are arranged coaxially to each other and wherein the first hydraulic motor (18) and the second hydraulic motor (20) are arranged coaxially to each other on axially opposite sides of the gearbox (22).

8. Propulsion system according to any of claims 1 to 6, wherein the first primary shaft (26) and the second primary shaft (28) are arranged parallel, but not coaxially, to each other and wherein the first hydraulic motor (18) and the second hydraulic motor (20) are also arranged parallel, but not coaxially to each other.

9. Vehicle (10) comprising a hydrostatic propulsion system according to any of the preceding claims.

## Patentansprüche

1. Hydrostatisches Antriebssystem für Fahrzeuge, mit einer Antriebsmaschine (12) und einer hydrostatischen Übertragungsvorrichtung (14),
bei dem die hydrostatische Übertragungsvorrichtung (14) eine hydraulische Verstellpumpe (16), einen ersten hydraulischen Verstellmotor (18), einen zweiten hydraulischen Verstellmotor (20), ein Getriebe (22) mit einer geraden Anzahl an Vorwärtsgängen (I, II, III, IV) gleich wenigstens vier und eine Steuereinheit aufweist, die zum Steuern des ersten und des zweiten hydraulischen Motors (18, 20) und zum Steuern des Eingreifens der Zahnräder des Getriebes (22) angeordnet ist,
bei dem das Getriebe (22) drei Hauptwellen (26, 28, 30) aufweist, nämlich eine erste Hauptwelle (26), die zur Drehung ständig antriebsmäßig mit dem ersten hydraulischen Motor (18) verbunden ist und ein oder mehrere Antriebszahnräder (34, 42) trägt, das/die den ungeraden Gängen (I, III) zugeordnet ist/sind, eine zweite Hauptwelle (28), die zur Drehung ständig antriebsmäßig mit dem zweiten hydraulischen Motor (20) verbunden ist und ein oder mehrere Antriebszahnräder (38) trägt, das/die den geraden Gängen (II) zugeordnet ist/sind, bis auf das Antriebszahnrad (46), das dem höchsten Gang (IV) der Vorwärtsgänge (I, II, III, IV) zugeordnet ist, und eine dritte Hauptwelle (30), die zur Drehung mit der Antriebsmaschine (12) verbunden ist und das Antriebszahnrad (46) trägt, das dem höchsten Gang (IV) zugeordnet ist,
bei der das Getriebe (22) ferner wenigstens eine zweite Welle (32) aufweist, die eine Vielzahl von Abtriebszahnrädern (36, 40, 44, 48) trägt, von denen jedes ständig mit einem entsprechenden Antriebszahnrad (34,38, 42,46) kämmt,
bei dem das Getriebe (22) ferner Zahnradeingreifmittel (50, 52) zum Verbinden jedes Antriebszahnrad (34, 38, 42, 46) zur Drehung mit der entsprechenden Hauptwelle (26, 28, 30) oder jedes Abtriebszahnrad (36,40, 44, 48) zur Drehung mit der entsprechenden zweiten Welle (32) aufweist, und
bei dem die Steuereinheit zum Steuern des ersten und des zweiten hydraulischen Motors (18, 20) und zum Steuern der Zahnradeingreifmittel (50, 52) des Getriebes (22) angeordnet ist, so dass sie vorgegebene Betriebsmodi implementiert, wobei die vorgegebenen Betriebsmodi die Übertragung der Bewegung mittels des ersten hydraulischen Motors (18) bei eingelegtem ersten Gang (I), die Übertragung der Bewegung mittels des zweiten hydraulischen Motors (20) bei eingelegtem zweiten Gang (II), das Gangumschalten von dem ersten Gang (I) zu dem zweiten Gang (II), bei dem der erste hydraulische Motor (18) mit der ersten Hauptwelle (26) verbunden ist und zur selben Zeit der zweite hydraulische Motor (20) mit der zweiten Hauptwelle (28) verbunden ist, und die Übertragung der Bewegung mittels der Antriebsmaschine (12) bei eingelegtem höchsten Gang (IV) aufweist.

2. Hydrostatisches Antriebssystem für Fahrzeuge, mit einer Antriebsmaschine (12) und einer hydrostatischen Übertragungsvorrichtung (14),
bei dem die hydrostatische Übertragungsvorrichtung (14) eine hydraulische Verstellpumpe (16), einen ersten hydraulischen Verstellmotor (18), einen zweiten hydraulischen Verstellmotor (20), ein Getriebe (22) mit einer geraden Anzahl an Vorwärtsgängen (I, II, III) gleich wenigstens drei und eine Steuereinheit aufweist, die zum Steuern des ersten und des zweiten hydraulischen Motors (18, 20) und zum Steuern des Eingreifens der Zahnräder des Getriebes (22) angeordnet ist,
bei dem das Getriebe (22) drei Hauptwellen (26, 28, 30) aufweist, nämlich eine erste Hauptwelle (26), die zur Drehung ständig antriebsmäßig mit dem ersten hydraulischen Motor (18) verbunden ist und ein oder mehrere Antriebszahnräder (34) trägt, das/die den ungeraden Gängen (I) zugeordnet ist/sind, bis auf das Antriebszahnrad (42), das dem höchsten Gang (III) der Vorwärtsgänge (I, II, III) zugeordnet ist, eine zweite Hauptwelle (28), die zur Drehung ständig antriebsmäßig mit dem zweiten hydraulischen Motor (20) verbunden ist und ein oder mehrere Antriebszahnräder (38) trägt, das/die den geraden Gängen (II) zugeordnet ist/sind, und eine dritte Hauptwelle (30), die zur Drehung mit der Antriebsmaschine (12) verbunden ist und das Antriebszahnrad (42) trägt, das dem höchsten Gang (III) zugeordnet ist,
bei der das Getriebe (22) ferner wenigstens eine zweite Welle (32) aufweist, die eine Vielzahl von Abtriebszahnrädern (36, 40, 44) trägt, von denen jedes ständig mit einem entsprechenden Antriebszahnrad (34, 38, 42) kämmt,
bei dem das Getriebe (22) ferner Zahnradeingreifmittel (50, 52) zum Verbinden jedes Antriebszahnrad (34, 38, 42) zur Drehung mit der entsprechenden Hauptwelle (26, 28, 30) oder jedes Abtriebszahnrad (36, 40, 44) zur Drehung mit der entsprechenden zweiten Welle (32) aufweist, und
bei dem die Steuereinheit zum Steuern des ersten und des zweiten hydraulischen Motors (18, 20) und zum Steuern der Zahnradeingreifmittel (50, 52) des Getriebes (22) angeordnet ist, so dass sie vorgegebene Betriebsmodi implementiert, wobei die vorgegebenen Betriebsmodi die Übertragung der Bewegung mittels des ersten hydraulischen Motors (18) bei eingelegtem ersten Gang (I), die Übertragung der Bewegung mittels des zweiten hydraulischen Motors (20) bei eingelegtem zweiten Gang (II), das Gangumschalten von dem ersten Gang (I) zu dem zweiten Gang (II), bei dem der erste hydraulische Motor (18) mit der ersten Hauptwelle (26) verbunden ist und zur selben Zeit der zweite hydraulische Motor (20) mit der zweiten Hauptwelle (28) verbunden ist, und die Übertragung der Bewegung mittels der Antriebsmaschine (12) bei eingelegtem höchsten Gang (III) aufweist.

3. Hydrostatisches Antriebssystem nach Anspruch 1 oder 2, bei dem die Antriebsmaschine (12) ein Verbrennungsmotor ist.

4. Hydrostatisches Antriebssystem nach einem der vorhergehenden Ansprüche, bei dem die Antriebszahnräder (34, 38, 42, 46; 34, 38, 42) jeweils auf der entsprechenden Hauptwelle (26, 28, 30) montiert sind, so dass sie zur Drehung antriebsmäßig damit verbunden sind, während die Abtriebszahnräder (36, 40, 44, 48; 36, 40, 44) leerlaufend auf der wenigstens einen zweiten Welle (32) montiert sind.

5. Hydrostatisches Antriebssystem nach einem der vorhergehenden Ansprüche, bei dem das Getriebe (22) nur eine zweite Welle (32) aufweist.

6. Hydrostatisches Antriebssystem nach einem der Ansprüche 1 bis 4, bei dem das Getriebe (22) zwei zweite Wellen aufweist, von denen die eine die Abtriebszahnräder (36, 44) trägt, die den ungeraden Gängen (I, III) zugeordnet sind, und die andere die Abtriebszahnräder (40, 48) trägt, die den geraden Gängen (II, IV) zugeordnet sind.

7. Hydrostatisches Antriebssystem nach einem der vorhergehenden Ansprüche, bei dem die erste Hauptwelle (26) und die zweite Hauptwelle (28) koaxial zueinander angeordnet sind und bei dem der erste hydraulische Motor (18) und der zweite hydraulische Motor (20) koaxial zueinander auf axial gegenüberliegenden Seiten des Getriebes (22) angeordnet sind.

8. Hydrostatisches Antriebssystem nach einem der Ansprüche 1 bis 6, bei dem die erste Hauptwelle (26) und die zweite Hauptwelle (28) parallel, aber nicht koaxial zueinander angeordnet sind und bei dem der erste hydraulische Motor (18) und der zweite hydraulische Motor (20) ebenfalls parallel, aber nicht koaxial zueinander angeordnet sind.

9. Fahrzeug (10) mit einem hydrostatischen Antriebssystem nach einem der vorhergehenden Ansprüche.

## Revendications

1. Système de propulsion hydrostatique pour des véhicules, comprenant un moteur principal (12) et une transmission hydrostatique ( 14),
dans lequel la transmission hydrostatique (14) comprend une pompe hydraulique à déplacement variable (16), un premier moteur hydraulique à déplacement variable (18), un second moteur hydraulique à déplacement variable (20), une boîte de vitesses (22) avec un nombre pair de vitesses avant (I, II, III, IV) égal au moins à quatre et une unité de commande agencée pour commander le premier et le second moteur hydraulique (18, 20) et pour commander l'engagement des vitesses de la boîte de vitesses (22),
dans lequel la boîte de vitesses (22) comprend trois arbres principaux (26, 28, 30), à savoir un premier arbre principal (26) qui est en permanence relié en entraînement pour la rotation au premier moteur hydraulique (18) et porte une ou plusieurs roues dentées menantes (34, 42) associées aux vitesses impaires (I, III), un deuxième arbre principal (28) qui est en permanence relié en entraînement pour la rotation au second moteur hydraulique (20) et porte une ou plusieurs roues dentées menantes (38) associées aux vitesses paires (II), à l'exception de la roue dentée menante (46) associée à la vitesse la plus élevée (IV) desdites vitesses avant (I, II, III, IV), et un troisième arbre principal (30) qui est relié pour la rotation au moteur principal (12) et porte la roue dentée menante (46) associée à ladite vitesse la plus élevée (IV),
dans lequel la boîte de vitesses (22) comprend en outre au moins un arbre secondaire (32) portant une pluralité de roues dentées menées (36, 40, 44, 48) engrenant en permanence chacune avec une roue dentée menante respective (34, 38, 42, 46),
dans lequel la boîte de vitesses (22) comprend en outre des moyens d'engagement de vitesse (50, 52) pour relier chaque roue dentée menante (34, 38, 42, 46) pour la rotation à l'arbre principal respectif (26, 28, 30) ou chaque roue dentée menée (36, 40, 44, 48) pour la rotation à l'arbre secondaire respectif (32) et
dans lequel l'unité de commande est agencée pour commander le premier et second moteur hydraulique (18, 20) et pour commander les moyens d'engagement de vitesse (50, 52) de la boîte de vitesses (22) de sorte à mettre en oeuvre des modes de fonctionnement prédéterminés, lesdits modes de fonctionnement prédéterminés incluant la transmission du mouvement à l'aide du premier moteur hydraulique (18) avec la première vitesse (I) engagée, la transmission du mouvement à l'aide du second moteur hydraulique (20) avec la deuxième vitesse (II) engagée, le changement de vitesse de la première vitesse (I) à la deuxième vitesse (II) avec le premier moteur hydraulique (18) relié au premier arbre principal (26) et en même temps avec le second moteur hydraulique (20) relié au deuxième arbre principal (28), et la transmission du mouvement à l'aide du moteur principal (12) avec la vitesse la plus élevée (IV) engagée.

2. Système de propulsion hydrostatique pour des véhicules, comprenant un moteur principal (12) et une transmission hydrostatique (14),
dans lequel la transmission hydrostatique (14) comprend une pompe hydraulique à déplacement variable (16), un premier moteur hydraulique à déplacement variable (18), un second moteur hydraulique à déplacement variable (20), une boîte de vitesses (22) avec un nombre impair de vitesses avant (I, II, III) égal au moins à trois et une unité de commande agencée pour commander le premier et second moteur hydraulique (18, 20) et pour commander l'engagement des vitesses de la boîte de vitesses (22),
dans lequel la boîte de vitesses (22) comprend trois arbres principaux (26, 28, 30), à savoir un premier arbre principal (26) qui est en permanence relié en entraînement pour la rotation au premier moteur hydraulique (18) et porte une ou plusieurs roues dentées menantes (34) associées aux vitesses impaires (I), à l'exception de la roue dentée menante (42) associée à la vitesse la plus élevée (III) desdites vitesses avant (I, II, III), un deuxième arbre principal (28) qui est en permanence relié en entraînement pour la rotation au second moteur hydraulique (20) et porte une ou plusieurs roues dentées menantes (38) associées aux vitesses paires (II), et un troisième arbre principal (30) qui est relié pour la rotation au moteur principal (12) et porte la roue dentée menante (42) associée à ladite vitesse la plus élevée (III),
dans lequel la boîte de vitesses (22) comprend en outre au moins un arbre secondaire (32) portant une pluralité de roues dentées menées (36, 40, 44) engrenant en permanence chacune avec une roue dentée menante respective (34, 38, 42),
dans lequel la boîte de vitesses (22) comprend en outre des moyens d'engagement de vitesse (50, 52) pour relier chaque roue dentée menante (34, 38, 42) pour la rotation à l'arbre principal respectif (26, 28, 30) ou chaque roue dentée menée (36, 40, 44) pour la rotation à l'arbre secondaire respectif (32) et
dans lequel l'unité de commande est agencée pour commander le premier et second moteur hydraulique (18, 20) et pour commander les moyens d'engagement de vitesse (50, 52) de la boîte de vitesses (22) de sorte à mettre en oeuvre des modes de fonctionnement prédéterminés, lesdits modes de fonctionnement prédéterminés incluant la transmission du mouvement à l'aide du premier moteur hydraulique (18) avec la première vitesse (I) engagée, la transmission du mouvement à l'aide du second moteur hydraulique (20) avec la deuxième vitesse (II) engagée, le changement de vitesse de la première vitesse (I) à la deuxième vitesse (II) avec le premier moteur hydraulique (18) relié au premier arbre principal (26) et en même temps avec le second moteur hydraulique (20) relié au deuxième arbre principal (28), et la transmission du mouvement à l'aide du moteur principal (12) avec la vitesse la plus élevée (III) engagée.

3. Système de propulsion selon la revendication 1 ou 2, dans lequel le moteur principal (12) est un moteur à combustion interne.

4. Système de propulsion selon l'une quelconque des revendications précédentes, dans lequel les roues dentées menantes (34, 38, 42, 46 ; 34, 38, 42) sont montées chacune sur l'arbre principal respectif (26, 28, 30) de sorte à être reliées en entraînement pour la rotation à celui-ci, alors que les roues dentées menées (36, 40, 44, 48 ; 36, 40, 44) sont montées folles sur ledit au moins un arbre secondaire (32).

5. Système de propulsion selon l'une quelconque des revendications précédentes, dans lequel la boîte de vitesses (22) comprend seulement un arbre secondaire (32).

6. Système de propulsion selon l'une quelconque des revendications 1 à 4, dans lequel la boîte de vitesses (22) comprend deux arbres secondaires, l'un portant les roues dentées menées (36, 44) associées aux vitesses impaires (I, III) et l'autre portant les roues dentées menées (40, 48) associées aux vitesses paires (II, IV).

7. Système de propulsion selon l'une quelconque des revendications précédentes, dans lequel le premier arbre principal (26) et le deuxième arbre principal (28) sont agencés coaxialement l'un à l'autre et dans lequel le premier moteur hydraulique (18) et le second moteur hydraulique (20) sont agencés coaxialement l'un à l'autre sur des côtés axialement en regard de la boîte de vitesses (22).

8. Système de propulsion selon l'une quelconque des revendications 1 à 6, dans lequel le premier arbre principal (26) et le deuxième arbre principal (28) sont agencés parallèlement, mais pas coaxialement, l'un à l'autre et dans lequel le premier moteur hydraulique (18) et le second moteur hydraulique (20) sont aussi agencés parallèlement, mais pas coaxialement, l'un à l'autre.

9. Véhicule (10) comprenant un système de propulsion hydrostatique selon l'une quelconque des revendications précédentes.
